(19) Europäisches Patentamt / European Patent Office / Office européen des brevets

(11) **EP 4 450 298 A1**

(12) **EUROPEAN PATENT APPLICATION**
published in accordance with Art. 153(4) EPC

(43) Date of publication:
**23.10.2024 Bulletin 2024/43**

(21) Application number: **22907318.4**

(22) Date of filing: **07.12.2022**

(51) International Patent Classification (IPC):
**B60C 9/08** (2006.01)    **B60C 1/00** (2006.01)
**B60C 9/00** (2006.01)    **B60C 9/22** (2006.01)
**B60C 11/00** (2006.01)

(52) Cooperative Patent Classification (CPC):
**B60C 1/00; B60C 9/00; B60C 9/08; B60C 9/22;
B60C 11/00;** Y02T 10/86

(86) International application number:
**PCT/JP2022/045068**

(87) International publication number:
**WO 2023/112791 (22.06.2023 Gazette 2023/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.12.2021 JP 2021204803**

(71) Applicant: **The Yokohama Rubber Co., Ltd.
Hiratsuka-shi, Kanagawa 254-8601 (JP)**

(72) Inventors:
 • **CHAYA, Takamitsu
  Hiratsuka-shi, Kanagawa 254-8601 (JP)**
 • **OZAKI, Makoto
  Hiratsuka-shi, Kanagawa 254-8601 (JP)**

(74) Representative: **Dilg, Haeusler, Schindelmann
Patentanwaltsgesellschaft mbH
Leonrodstraße 58
80636 München (DE)**

(54) **PNEUMATIC TIRE**

(57) Provided is a pneumatic tire that can provide high-speed durability, high-speed steering stability, and shock burst resistance in a highly compatible manner while reducing the number of carcass layers to reduce a tire weight. In the pneumatic tire including one carcass layer (4) and a tread portion (1) made up of a cap tread layer (11) and an under tread layer (12), an under tread layer (11) is made up of a rubber composition having hardness at 20°C ranging from 60 to 65, tensile stress at 100% elongation at 100°C ranging from 2.0 MPa to 4.0 MPa, and a product of tensile strength at 100°C and an elongation at break at 100°C of 2000 or more, the carcass layer (4) is made of an organic fiber cord having an elongation ratio under a load of 1.5 cN/dtex on an inner circumferential side of a belt layer ranging from 5.5% to 8.5% and an elongation at break ranging from 20% to 30%, and a product $A = D \times Ec$ of a fineness based on corrected mass D per carcass cord and an insertion count Ec is set to from $1.8 \times 10^5$ dtex/50 mm to $3.0 \times 10^5$ dtex/50 mm.

FIG. 1

**Description**

Technical Field

The present invention relates to a pneumatic tire in which the number of carcass layers is reduced to one layer for weight reduction.

Background Art

To reduce the weight of a tire, the number of carcass layers is reduced in a tire of a type in which two carcass layers are conventionally used (for example, see Patent Document 1). However, when the number of carcass layers is simply reduced, there is a problem that the same level of performance as that of the conventional carcass layer having the two layer structure cannot be ensured. For example, due to the reduction of the carcass layer, there is a possibility that rigidity in a tire lateral direction (lateral spring constant) becomes insufficient and high-speed steering stability cannot be obtained. In addition, there is also a concern that shock burst resistance is lowered due to the reduction of the carcass layer. As a countermeasure, it is conceivable to increase fineness of carcass cords in a carcass layer having a single-layer structure (thicken fineness) to ensure the same level of performance as that of the conventional carcass layer having the two layer structure. However, when the fineness of the carcass cord is thickened, heat build-up is possibly deteriorated, and there is a problem that it is difficult to ensure high-speed durability. Therefore, to reduce the weight of the tire by reducing the number of carcass layers to one layer, there is a demand for a countermeasure for providing high-speed durability, high-speed steering stability, and shock burst resistance in a highly compatible manner.

The "shock burst resistance" described above is durability against damage (shock burst) in which a carcass is broken when the tire receives a large shock during traveling. An index of the shock burst resistance is, for example, a plunger energy test (a test in which a plunger having a predetermined size is pressed against a central portion of a tread to measure breaking energy when the tire breaks). In the present description, "shock burst resistance" may be rephrased as "plunger performance."

Citation List

Patent Literature

Patent Document 1: JP 2010-137812 A

Summary of Invention

Technical Problem

An object of the present invention is to provide a pneumatic tire that allows providing high-speed durability, high-speed steering stability, and shock burst resistance in a highly compatible manner while reducing the number of carcass layers to reduce a weight of a tire.

Solution to Problem

A pneumatic tire according to an embodiment of the present invention to achieve the object described above may include a tread portion extending in a tire circumferential direction and having an annular shape, a pair of sidewall portions respectively disposed on both sides of the tread portion, a pair of bead portions each disposed on an inner side of the pair of sidewall portions in a tire radial direction, one carcass layer mounted between the pair of bead portions, a plurality of belt layers disposed on an outer circumferential side of the carcass layer in the tread portion, and a belt reinforcing layer disposed on an outer circumferential side of the belt layer. The tread portion may be made up of two layers, an under tread layer disposed on an outer circumferential side of the belt reinforcing layer and a cap tread layer disposed on an outer circumferential side of the under tread layer and constituting a road contact surface of the tread portion. An under tread rubber composition constituting the under tread layer may have hardness at 20°C ranging from 60 to 65, tensile stress at 100% elongation (M100) at 100°C ranging from 2.0 MPa to 4.0 MPa, and a product (TB $\times$ EB) of tensile strength TB (unit: MPa) at 100°C and an elongation at break EB (unit: %) at 100°C of 2000 or more. A carcass cord constituting the carcass layer may be made of an organic fiber cord having an elongation ratio under a load of 1.5 cN/dtex on an inner circumferential side of the belt layer ranging from 5.5% to 8.5% and an elongation at break ranging from 20% to 30%, and a product A = D $\times$ Ec of a fineness based on corrected mass D per carcass cord (unit: dtex/cord) and an insertion count Ec (unit: cord count/50 mm) of the carcass cord per 50 mm in a direction orthogonal to an extension direction of the carcass cord may satisfy a relationship ranging from $1.8 \times 10^5$ dtex/50 mm to $3.0 \times 10^5$ dtex/50 mm.

Advantageous Effects of Invention

In an embodiment of the present invention, to reduce the number of carcass layers to one layer, the physical properties of the carcass cords and the carcass layers are set as described above, and the under tread layer is made up of the under tread rubber composition having the physical properties described above. Therefore, high-speed durability, high-speed steering stability, and shock burst resistance can be provided in a well-balanced and highly compatible manner. Especially, since the elongation under the load of 1.5 cN/dtex of the carcass cord on the inner circumferential side of the belt layers is set to the range described above, rigidity of the carcass layer to be moderately low in a region overlapping with the belt layers. This can sufficiently ensure a ground contact area and improve steering stability. Since the product A of the carcass layer described above, that is, fineness of the carcass cord per unit width is set to be within the range described above, high-speed durability, high-speed steering stability, and shock burst resistance can be ensured in a well-balanced manner. Further, since the elongation at break of the carcass cord is in the range described above, the carcass cord easily follows local deformation, and it becomes possible to sufficiently allow the deformation at a plunger energy test (when pressed by a plunger), and it is possible to improve breaking energy. That is, since breaking durability against a projection input of the tread portion during traveling is improved, shock burst resistance can be improved. In addition to this, since the hardness and the tensile stress (M100) of the under tread are set in the above-described ranges, high-speed durability and high-speed steering stability can be improved. Setting the product (TB × EB) of the tensile strength TB and the elongation at break EB as described above also allows improvement in high-speed durability to be expected. The cooperation of these can provide high-speed durability, high-speed steering stability, and shock burst resistance in a well-balanced and highly compatible manner.

The "elongation at break" of the carcass cord is an elongation ratio at break (%) of a sample cord (a carcass cord) measured by conducting the tensile test in accordance with JIS L1017 "Test methods for chemical fiber tire cords" under conditions of the grip interval being 250 mm and the tensile speed being 300 ± 20 mm/minute. The "elongation ratio under a load of 1.5 cN/dtex on an inner circumferential side of the belt layer" is an elongation ratio (%) of sample cords (carcass cords taken out from the inner circumferential side of the belt layer) measured under a load of 1.5 cN/dtex measured by conducting the tensile test in accordance with JIS L1017 "Test methods for chemical fiber tire cords" under conditions of the grip interval being 250 mm and the tensile speed being 300 ± 20 mm/minute.

In the under tread rubber composition, "hardness" is a hardness of a rubber composition measured in accordance with JIS K6253 and by using a Type A durometer at a temperature of 20°C. The "tensile stress at 100% elongation (M100) at 100°C" is a value measured in accordance with JIS K6251, by using a No. 3 dumbbell test piece, and under conditions of a tensile speed of 500 mm/minute and a temperature of 100°C. The "tensile strength TB at 100°C" is a value (unit: MPa) measured in accordance with JIS K6251 and under a condition of a temperature of 100°C. The "elongation at break EB at 100°C" is a value (unit: %) measured in accordance with JIS K6251 and under a condition of a temperature of 100°C.

In an embodiment of the present invention, a mass of an anti-aging agent blended in the under tread rubber composition preferably ranges from 0.7 mass% to 1.5 mass% of a mass of the entire under tread rubber composition. Using the under tread rubber composition can expect, in addition to the above-described performances, an effect of improving groove cracking resistance and water resistant adhesiveness to the belt layer.

In an embodiment of the present invention, a cover cord constituting the belt reinforcing layer is preferably made of an organic fiber cord having elongation ratio under a load of 2.0 cN/dtex at 100°C ranging from 2.0% to 4.0%. Using the cover cord can effectively suppress rising of the belt layer during high-speed travel and is advantageous to improve high-speed durability. The "elongation ratio under a load of 2.0 cN/dtex at 100°C" of the cover cord is an elongation ratio (%) of sample cords (cover cords) measured under a load of 2.0 cN/dtex measured by conducting a tensile test in accordance with JIS L1017 "Test methods for chemical fiber tire cords" under conditions of a grip interval being 250 mm and a tensile speed being 300 ± 20 mm/minute.

Brief Description of Drawings

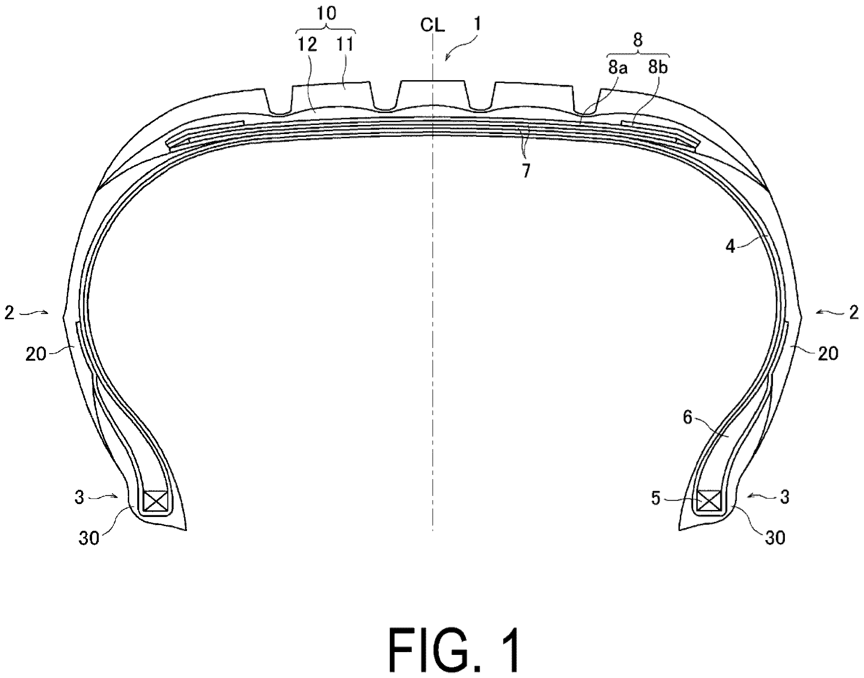

FIG. 1 is a meridian cross-sectional view illustrating a pneumatic tire according to an embodiment of the present invention.

Description of Embodiments

Configurations of embodiments of the present invention will be described in detail below with reference to the accompanying drawings.

As illustrated in FIG. 1, a pneumatic tire according to an embodiment of the present invention includes a tread portion 1, a pair of sidewall portions 2 respectively disposed on both sides of the tread portion 1, and a pair of bead portions 3 each disposed on an inner side of the pair of sidewall portions 2 in a tire radial direction. "CL" in FIG. 1 denotes a tire equator. Although not illustrated in FIG. 1, which is a meridian cross-sectional view, the tread portion 1, the sidewall portions 2, and the bead portions 3 each extend in a tire circumferential direction and have an annular shape. This forms a toroidal basic structure of the pneumatic tire. Although the description using FIG. 1 is basically based on the illustrated meridian cross-sectional shape, all of the tire components extend in the tire circumferential direction and form the annular shape.

One carcass layer 4 including a plurality of reinforcing cords (hereinafter referred to as carcass cords) extending in the tire radial direction is mounted between the left and right pair of bead portions 3. A bead core 5 is embedded within each of the bead portions, and a bead filler 6 having an approximately triangular cross-sectional shape is disposed on an outer periphery of the bead core 5. The carcass layer 4 is folded back around the bead core 5 from an inner side to an outer side in the tire width direction. Accordingly, the bead core 5 and the bead filler 6 are wrapped by a body portion (a portion extending from the tread portion 1 through each of the sidewall portions 2 to each of the bead portions 3) and a folded back portion (a portion folded back around the bead core 5 of each bead portion 3 to extend toward each sidewall portion 2 side) of the carcass layer 4.

A plurality of belt layers 7 (in the illustrated example, two layers) are embedded on an outer circumferential side of the carcass layer 4 in the tread portion 1. Each of the belt layers 7 includes a plurality of reinforcing cords (hereinafter referred to as belt cords) inclining with respect to the tire circumferential direction, and the belt cords are disposed so as to intersect with one another between the layers. In the belt layers 7, an inclination angle of the belt cord with respect to the tire circumferential direction is set within a range, for example, from 10° to 40°.

In addition, a belt reinforcing layer 8 is provided on an outer circumferential side of the belt layers 7 for the purpose of improvement of high-speed durability. The belt reinforcing layer 8 includes a reinforcing cord (hereinafter referred to as a cover cord) oriented in the tire circumferential direction. As the cover cord, for example, an organic fiber cord can be used. In the belt reinforcing layer 8, the angle of the cover cord with respect to the tire circumferential direction is set to, for example, from 0° to 5°. As the belt reinforcing layer 8, a full cover layer 8a that covers the entire region of the belt layers 7 in the width direction, a pair of edge cover layers 8b that locally cover both end portions of the belt layers 7 in the tire width direction, or a combination thereof can be provided (in the example illustrated, both of the full cover layer 8a and the edge cover layers 8b are provided). The belt reinforcing layer 8 can be formed, for example, by helically winding a strip material made of at least a single cover cord arranged and covered with coating rubber in the tire circumferential direction.

In the tread portion 1, a tread rubber layer 11 is disposed on the outer circumferential side of the above-described tire components (the carcass layer 4, the belt layer 7, and the belt reinforcing layer 8). In particular, in an embodiment of the present invention, the tread rubber layer 10 has a structure in which two types of rubber layers having different physical properties (a cap tread layer 11 exposed to a road contact surface and an under tread layer 12 disposed on an inner circumferential side of the cap tread layer 11) are stacked in the tire radial direction. A side rubber layer 20 is disposed on the outer circumferential side (the outer side in the tire width direction) of the carcass layer 4 in the sidewall portion 2, and a rim cushion rubber layer 30 is disposed on the outer circumferential side (the outer side in the tire width direction) of the carcass layer 4 in the bead portion 3.

The present invention mainly relates to the cords (the carcass cord and the cover cords) constituting the respective layers of the carcass layer 4 and the belt reinforcing layer 8 and a tread rubber layer 11 (especially the under tread layer 12) described above, and therefore the other basic structure of the tire is not limited to those described above.

The pneumatic tire of an embodiment of the present invention is a tire in which the number of the carcass layers 4 is reduced to reduce the weight of the tire, and the number of layers of the carcass layer 4 is limited to one layer. When the number of carcass layers 4 is two or more layers, the weight of the tire cannot be sufficiently reduced.

According to an embodiment of the present invention, the carcass cord constituting the carcass layer 4 is made of organic fiber cords obtained by intertwining organic fiber filament bundles. In the carcass cord used in an embodiment of the present invention, the elongation ratio under a load of 1.5 cN/dtex and elongation at break on the inner circumferential side of the belt layer 7 are set in respective specific ranges. To configure the carcass layer 4, a product $A = D \times E_c$ of a fineness based on corrected mass D (unit: dtex/cord) per carcass cord and an insertion count $E_c$ (unit: cord count/50 mm) of the carcass cord per 50 mm in a direction orthogonal to an extension direction of the carcass cord is set in a specific range described later. Specifically, the elongation ratio under a load of 1.5 cN/dtex on the inner circumferential side of the belt layer 7 of the carcass cord of an embodiment of the present invention ranges from 5.5% to 8.5% and preferably ranges from 6.0% to 7.0%. Furthermore, the elongation at break of the carcass cord of an embodiment of the present invention preferably ranges from 20% to 30% and more preferably ranges from 22% to 28%. Furthermore, the above-described product $A = D \times E_c$ is set to $1.8 \times 10^5$ dtex/50 mm to $3.0 \times 10^5$ dtex/50 mm and preferably $2.2 \times 10^5$ dtex/50 mm to $2.7 \times 10^5$ dtex/50 mm. Since the carcass cord (the carcass layer 4) having such physical properties is used, even when the number of carcass layers 4 is one layer, high-speed durability, high-speed steering stability, and shock burst resistance can be provided in a well-balanced and highly compatible manner as described below.

The elongation ratio under a load of 1.5 cN/dtex on the inner circumferential side of the belt layer 7 of the carcass cord set in the above-described range moderately lowers the rigidity of the carcass layer 4 in a region overlapping with the belt layers 7. This allows sufficiently ensuring a ground contact area during travel, and therefore steering stability can be satisfactory. When the elongation ratio under a load of 1.5 cN/dtex on the inner circumferential side of the belt layer 7 of the carcass cord is less than 5.5%, the fatigue resistance of the carcass cord deteriorates, and high-speed durability decreases. When the elongation ratio under a load of 1.5 cN/dtex on the inner circumferential side of the belt layer 7 of the carcass cord is more than 8.5%, rising during high-speed travel increases and high-speed durability decreases.

By the elongation at break of the carcass cord being set in the range described above, the rigidity of the carcass cord can be appropriately ensured, and steering stability can be satisfactorily achieved. In addition, the carcass cord easily follows local deformation, and it becomes possible to sufficiently allow the deformation at the plunger energy test (when pressed by the plunger), and it is possible to improve breaking energy. That is, since the breaking durability against the projection input of the tread portion 1 during traveling is improved, shock burst resistance can be improved. When the elongation at break of the carcass cord is less than 20%, the effect of improving the shock burst resistance cannot be obtained. When the elongation at break of the carcass cord is more than 30%, intermediate elongation tends to be increased, the rigidity is thus reduced, and the steering stability possibly decreases.

Since the product $A = D \times Ec$ described above is equivalent to the fineness of the carcass cord per unit width in the carcass layer 4, when it satisfies the range described above, high-speed durability, high-speed steering stability, and shock burst resistance can be ensured in a well-balanced manner. When the product A is less than $1.8 \times 10^5$ dtex/50 mm, an amount of yarn of the carcass cords in the carcass layer 4 cannot be sufficiently ensured, and shock burst resistance and high-speed steering stability decrease. The product A in excess of $3.0 \times 10^5$ dtex/50 mm increases the heat generation of the carcass layer 4, thus decreasing high-speed durability. In addition, since the interval between the carcass cords in the carcass layer 4 is narrowed, it is difficult to maintain durability also from this point. The individual ranges of the fineness based on corrected mass D and the count Ec described above are not particularly limited as long as the product A satisfies the range described above.

The carcass cord preferably has a thermal shrinkage rate ranging from 0.5% to 2.5% and more preferably from 1.0% to 2.0. The "thermal shrinkage rate" is a dry thermal shrinkage rate (%) of sample cords measured in accordance with JIS L1017 "Test methods for chemical fiber tire cords" with a length of specimen being 500 mm and when heated at 150°C for 30 minutes. By using the carcass cord having such a thermal shrinkage rate, occurrence of kinking (twisting, folding, wrinkling, collapsing in shape, and the like) in the carcass cord (the organic fiber cord) during vulcanization and a decrease in durability or a decrease in uniformity can be suppressed. In this case, when the thermal shrinkage rate of the carcass cord is less than 0.5%, kinking tends to occur during vulcanization, and thus it is difficult to favorably maintain durability. When the thermal shrinkage rate of the carcass cord exceeds 2.5%, uniformity may deteriorate.

In addition, a twist coefficient K represented by Formula (1) described below of the carcass cord preferably ranges from 2000 to 2500 and more preferably ranges from 2100 to 2400. The twist coefficient K is a value of the carcass cord after dip treatment. Using a cord having such a twist coefficient K achieves satisfactory cord fatigue and can ensure excellent durability. In this case, when the twist coefficient K of the carcass cord is less than 2000, the cord fatigue decreases, and thus it is difficult to ensure durability. When the twist coefficient K of the carcass cord exceeds 2500, productivity of the carcass cord deteriorates.

$$K = T \times D^{1/2} \, (1)$$

(In the formula, T is a cable twist count (unit: time/10 cm) of the carcass cord and D is a total fineness (unit: dtex) of the carcass cord.)

The type of organic fibers constituting the carcass cord (organic fiber cord) is not limited. For example, polyester fibers, nylon fibers, or aromatic polyamide fibers (aramid fibers) can be used, and, in particular, polyester fibers can be suitably used. Additionally, examples of the polyester fibers include polyethylene terephthalate fibers (PET fibers), polyethylene naphthalate fibers (PEN fibers), polybutylene terephthalate fibers (PBT), and polybutylene naphthalate fibers (PBN), with PET fibers being particularly suitable. Whichever fiber is used, the physical properties of the fiber advantageously provide high-speed durability and steering stability in a well-balanced and highly compatible manner. In particular, PET fibers, which are inexpensive, allow reduction in the cost of the pneumatic tire. In addition, workability in producing cords can be increased.

As the cover cord constituting the belt reinforcing layer 8, the organic fiber cord is used as described above, and, for example, a polyethylene terephthalate fiber cord (PET fiber cord) can be used. The cover cord having an elongation under a load of 2.0 cN/dtex at 100°C preferably ranges from 2.0% to 4.0%, and more preferably from 2.5% to 3.5% can be suitably used. Using the cover cord having the physical properties can effectively suppress the rising of the belt layer 7 during high-speed travel and is advantageous to improve high-speed durability. An effect of reducing mid-range frequency road noise can be also added. When the elongation under a load of 2.0 cN/dtex at 100°C of the cover cord is less than 2.0%, the fatigue resistance of the cord decreases, and the durability of the tire possibly decreases. When the elongation under a load of 2.0 cN/dtex at 100°C of the cover cord exceeds 4.0%, there are possibilities that the rising of the belt layer 7 during high-speed travel cannot be sufficiently suppressed and high-speed durability cannot be sufficiently ensured. In addition, the additional effect of reducing mid-range frequency road noise described above cannot be expected.

As the under tread rubber composition constituting the under tread layer 12, a rubber in which respective hardness at 20°C, tensile stress at 100% elongation (M100) at 100°C, and a product (TB × EB) of a tensile strength TB (unit: MPa) at 100°C and an elongation at break EB (unit: %) at 100°C are set within specific ranges is used. Specifically, the hardness at 20°C ranges from 60 to 65 and preferably from 61 to 64. The tensile stress at 100% elongation (M100) at 100°C ranges from 2.0 MPa to 4.0 MPa and preferably from 2.2 MPa to 3.8 MPa. The product (TB × EB) of the tensile strength TB (unit: MPa) at 100°C and the elongation at break EB (unit: %) at 100°C is 2000 or more and preferably ranging from 2200 to 5500. Since the under tread rubber composition having such physical properties is used, as described later, tire performance concerned to be reduced when the number of the carcass layers 4 is one layer can be supplemented, and high-speed durability, high-speed steering stability, and shock burst resistance can be provided in a well-balanced and highly compatible manner.

Setting the hardness of the under tread rubber composition within the above-mentioned range is advantageous in providing steering stability and high-speed durability in a compatible manner. The hardness of the under tread rubber composition of less than 60 deteriorates the steering stability when the tire is made. When the hardness of the under tread rubber composition is more than 65, high-speed durability cannot be ensured.

Setting the tensile stress (M100) of the under tread rubber composition within the above-described range is advantageous in providing steering stability and high-speed durability in a highly compatible manner. The tensile stress (M100) of the under tread rubber composition of less than 2.0 MPa deteriorates the steering stability when the tire is made. The tensile stress (M100) of the under tread rubber composition exceeding 4.0 MPa cannot ensure high-speed durability.

High-speed durability can also be improved by setting the product (TB × EB) of the tensile strength TB and the elongation at break EB of the under tread rubber composition as described above. The product (TB × EB) of less than 2000 cannot sufficiently ensure high-speed durability. An individual value of the tensile strength TB or the elongation at break EB of the under tread rubber composition is not particularly limited, but the tensile strength TB of the under tread rubber composition can be set, for example, ranging from 8.0 MPa to 13.0 MPa, and the elongation at break EB of the under tread rubber composition can be set ranging from 200% to 400%. The tensile strength TB and the elongation at break EB of the under tread rubber composition in this paragraph refer to the tensile strength TB (unit: MPa) at 100°C and the elongation at break EB (unit: %) at 100°C in the same manner as described above.

The under tread rubber composition having the above-mentioned physical properties can be obtained, for example, by setting the compound as follows. The above-described physical properties are not determined only by the following compound and can be adjusted also by, for example, kneading conditions and kneading methods.

In the under tread rubber composition described above (hereinafter referred to as the rubber composition according to an embodiment of the present invention in some cases), the rubber component is a diene-based rubber and preferably contains an isoprene-based rubber and a butadiene rubber. Examples of the isoprene-based rubber can include natural rubbers and isoprene rubbers (synthetic polyisoprene rubbers). As the isoprene-based rubber, natural rubber is preferably used alone, or natural rubber and isoprene rubber are preferably used in combination. The rubber composition according to an embodiment of the present invention may arbitrarily contain another diene-based rubber other than the isoprene-based rubber or the butadiene rubber. Examples of other diene-based rubbers include styrene-butadiene rubber and acrylonitrile-butadiene rubber. The diene-based rubbers can be used alone or as any given blend.

Blending the isoprene-based rubber can obtain sufficient rubber strength as a rubber composition for a tire. When the entire rubber component is 100 mass%, the blended amount of the isoprene-based rubber preferably ranges from 60 mass% to 90 mass% and more preferably ranges from 65 mass% to 85 mass%. The blended amount of the isoprene-based rubber means the blended amount of the natural rubber when the natural rubber is used alone or the total amount of the natural rubber and the isoprene rubber when the natural rubber and the isoprene rubber are used in combination. The blended amount of the isoprene-based rubber of less than 60 mass% cannot sufficiently ensure the rubber strength. When the blended amount of the isoprene-based rubber exceeds 90 mass%, it becomes difficult to obtain the above-described physical properties.

When the entire rubber component is 100 mass%, the blended amount of the butadiene rubber preferably ranges from 10 mass% to 40 mass% and more preferably from 15 mass% to 35 mass%. The blended amount of the butadiene rubber of less than 10 mass% increases viscosity and decreases extrudability. The blended amount of the butadiene rubber of more than 60 mass% decreases tackiness of an extrudate and deteriorates formability.

As the butadiene rubber, a butadiene rubber (hereinafter referred to as a specific BR) in which respective cis-1,4 bond content, Mooney viscosity ($ML_{1+4}$) at 100°C, and (T-cp)/($ML_{1+4}$), which is the ratio of 5 mass% toluene solution viscosity (T-cp) (unit: cps) at 25°C to the Mooney viscosity ($ML_{1+4}$) at 100°C satisfy specific ranges described later may be used. Using the specific BR is advantageous for ensuring the above-described physical properties.

The cis-1,4 bond content in the specific BR is preferably 97% or more and more preferably 98% or more. This can reduce heat generation. When the cis-1,4 bond content is less than 97%, the heat generation increases. The cis-1,4 bond content can be measured using a nuclear magnetic resonance apparatus (NMR).

The Mooney viscosity ($ML_{1+4}$) of the specific BR at 100°C is preferably 42 or more and more preferably 50 or more and 70 or less. This can provide good hardness and fuel economy in a compatible manner. The Mooney viscosity ($ML_{1+4}$) at 100°C of less than 42 decreases strength at break. The Mooney viscosity can be measured using an L-type rotor in accordance with JIS 6300-1.

The (T-cp)/($ML_{1+4}$) of the specific BR preferably ranges from 2.0 to 3.0, more preferably from 2.2 to 2.5, and even more preferably from 2.3 to 2.5. The (T-cp)/($ML_{1+4}$) is an indicator of a degree of branching of a polymer chain of the BR, and the larger value means the smaller degree of branching, that is, high linearity. When this value is less than 2.0, none of low heat build-up, hardness, abrasion resistance, and setting resistance can be improved. The value exceeding 3.0 deteriorates the processability during extrusion. The toluene solution viscosity (T-cp) can be obtained by dissolving a sample rubber in toluene as a 5 mass% of a solution and measuring the viscosity of the solution at 25°C with a Cannon-Fenske kinematic viscometer.

Carbon black is preferably blended to the above-described under tread rubber composition as a filler. Blending the carbon black can increase the strength of the rubber composition. In particular, the CTAB adsorption specific surface area of the carbon black is less than 70 $m^2$/g and preferably 30 $m^2$/g to 50 $m^2$/g. Using the carbon black having the large particle diameter in this manner can effectively increase rubber hardness while maintaining low heat build-up. If the CTAB adsorption specific surface area of the carbon black is 70 $m^2$/g or more, the heat build-up degrades. The CTAB adsorption specific surface area of the carbon black is measured in accordance with ISO 5794.

The blended amount of the carbon black preferably ranges from 35 parts by mass to 60 parts by mass, more preferably from 35 parts by mass to 55 parts by mass, and still more preferably from 35 parts by mass to 50 parts by mass per 100 parts by mass of the rubber component described above. The blended amount of the carbon black of less than 35 parts by mass degrades the hardness. The blended amount of the carbon black exceeding 60 parts by mass degrades the heat build-up.

The rubber composition according to an embodiment of the present invention may contain other inorganic fillers other than carbon black. Examples of other inorganic fillers include materials typically used for a rubber composition for tires, such as silica, clay, talc, calcium carbonate, mica, and aluminum hydroxide.

An anti-aging agent, particularly an amine-based anti-aging agent is preferably blended to the under tread rubber composition. The blended amount (the mass) of the anti-aging agent preferably ranges from 0.7 mass% to 2.0 mass%, more preferably from 0.8 mass% to 1.8 mass%, and further preferably from 1.0 mass% to 1.5 mass% per the mass of the entire rubber component. This can expect, in addition to the above-described performances, an effect of improving groove cracking resistance and water resistant adhesiveness to the belt layer. The blended amount of the anti-aging agent of less than 0.7 mass% cannot expect the effect of improving cracking resistance and processability, reducing, in particular, cracking resistance. The blended amount of the anti-aging agent of more than 1.5 mass% reduces processability.

Examples of the amine-based anti-aging agent include N-phenyl N'-(1,3-dimethylbutyl)-p-phenylenediamine, alkylated diphenylamine, 4,4'-bis($\alpha,\alpha$-dimethylbenzyl)diphenylamine, N,N'-diphenyl-p-phenylenediamine, N-phenyl-N'-isopropyl-p-phenylenediamine, p-(p-toluenesulfonylamide)diphenylamine, N-phenyl-N'-(3-methacryloyloxy-2-hydroxypropyl)-p-phenylenediamine, and a 2,2,4-trimethyl-1,2-dihydroquinoline polymer, and in particular, N-phenyl N'-(1,3-dimethylbutyl)-p-phenylenediamine can be suitably used.

The pneumatic tire of an embodiment of the present invention can provide high-speed durability, high-speed steering stability, and shock burst resistance in a well-balanced and highly compatible manner by the cooperation of the physical properties of the above-described respective members even when the number of carcass layers is reduced to one layer. To obtain the effects of an embodiment of the present invention, matters at least to be satisfied include the physical properties of the carcass cord (the elongation ratio under a load of 1.5 cN/dtex on the inner circumferential side of the belt layer, the elongation at break, the product A = D × Ec) and the physical properties of the under tread rubber composition (hardness at 20°C, tensile stress at 100% elongation (M100) at 100°C, and the product TB × EB). Therefore, various physical properties and blends other than these can be combined appropriately for use.

The present invention will further be described below by way of Examples, but the scope of the present invention is not limited to the Examples.

Example

Pneumatic tires (test tires) of Conventional Example 1, Comparative Examples 1 to 7, and Examples 1 to 3 in which a tire size was 230/60R18 and had a basic structure illustrated in FIG. 1, and the number of layers, the material and fineness of the carcass cords, the elongation ratio under a load of 1.5 cN/dtex on the inner circumferential side of the belt layer ("Intermediate elongation" in the table), the elongation at break, and the product A = D × Ec of the fineness based on corrected mass D (unit: dtex/cord) per carcass cord and the insertion count Ec (unit: cord count/50 mm) of the carcass cord per 50 mm in the direction orthogonal to the extension direction of the carcass cord of the carcass layer were set as in Table 1, a type, hardness at 20°C, the tensile stress at 100% elongation (M100) at 100°C, the product (TB × EB) of the tensile strength TB (unit: MPa) at 100°C and the elongation at break EB (unit: %) at 100°C, and a proportion of a mass of the anti-aging agent occupying the under tread rubber composition of the rubber constituting the under tread layer were set as in Table 1, and further the elongation ratio under a load of 2.0 cN/dtex in the cover cord constituting the belt reinforcing layer (intermediate elongation) at 100°C was set as in Table 1 were manufactured.

The "elongation at break" of the carcass cord was the elongation ratio at break (%) of a sample cord (carcass cord) and was measured by conducting a tensile test under conditions of a grip interval of 250 mm and a tensile speed of 300 ± 20 mm/min in accordance with JIS L1017 "Test methods for chemical fiber tire cords". The "elongation ratio under a load of 1.5 cN/dtex on the inner circumferential side of the belt layer" of the carcass cord is an elongation ratio (%) of sample cords (carcass cords taken out from the inner circumferential side of the belt layer) measured under a load of 1.5 cN/dtex and was measured by conducting the tensile test in accordance with JIS L1017 "Test methods for chemical fiber tire cords" under conditions of the grip interval being 250 mm and the tensile speed being 300 ± 20 mm/minute. The "elongation ratio under a load of 2.0 cN/dtex at 100°C" of the cover cord is an elongation ratio (%) of sample cords (cover cords) measured under a load of 2.0 cN/dtex and was measured by conducting the tensile test in accordance with JIS L1017 "Test methods for chemical fiber tire cords" under conditions of a grip interval being 250 mm and a tensile speed being 300 ± 20 mm/minute.

Regarding the under tread rubber composition, "Hardness" was measured in accordance with JIS K6253 and by using a Type A durometer at a temperature of 20°C. The "tensile stress at 100% elongation (M100) at 100°C" was measured in accordance with JIS K6251, by using a No. 3 dumbbell test piece, and under conditions of a tensile speed of 500 mm/minute and a temperature of 100°C. The "tensile strength TB at 100°C" was measured in accordance with JIS K6251 and under a condition of a temperature of 100°C. The "elongation at break EB at 100°C" was measured in accordance with JIS K6251 and under a condition of a temperature of 100°C.

In the column of the cord material in Table 1, three types of respective polyethylene terephthalate fiber cords having different physical properties are used and indicated as "PET1," "PET2," and "PET3." PET1 to PET3 are distinguished by "elongation at break" of the carcass cord and "elongation ratio under a load of 1.5 cN/dtex on the inner circumferential side of the belt layer." In the column of the type of under tread rubber composition constituting the under tread rubber layer, numbers of under tread rubber compositions A to F having the blends shown in Table 2 are shown. Table 2 shows, in addition to the blends of the respective under tread rubber compositions A to F, hardness at 20°C, the tensile stress at 100% elongation (M100) at 100°C, the product (TB × EB) of the tensile strength TB (unit: MPa) at 100°C and the elongation at break EB (unit: %) at 100°C, and a proportion of a mass of the anti-aging agent occupying the under tread rubber composition of each of the under tread rubber compositions A to F as the physical properties and the like as a reference. The values of these physical properties and the like correspond to those shown in Table 1.

These test tires were evaluated for tire mass, shock burst resistance (plunger energy), high-speed steering stability, and high-speed durability by an evaluation method below, and the results are also shown in Table 1.

Tire Mass

The mass of each test tire was measured. The evaluation results are indicated by an amount of change (unit: kg) with respect to the measurement value of Conventional Example 1. When the weight is decreased, it is indicated by a negative value.

Shock Burst Resistance (Plunger Energy)

Each test tire was assembled on a wheel having a rim size of 18 × 7.5J, inflated to an air pressure of 250 kPa, and subjected to a tire breaking test (plunger breaking test) in which a plunger having a plunger diameter of 19 ± 1.6 mm was pressed against the central portion of the tread under a condition of a load speed (plunger pushing speed) of 50.0 ± 1.5 m/min in accordance with JIS K6302 to measure tire strength (tire breaking energy). The evaluation results are indicated as index values with respect to the measurement value of Conventional Example 1 assigned 100. The larger this value is, the larger the breaking energy (plunger energy) is, and this value means excellent in shock burst resistance. When the index value is less than "110," it means that a sufficient improvement effect was not obtained.

Steering stability

Each of the test tires was assembled on a wheel having a rim size of 18 × 7.5J, inflated to an air pressure of 250 kPa, and mounted on a test vehicle (four wheel drive vehicle) having an engine displacement of 2000 cc. Sensory evaluations for steering stability were performed on a test course of dry road surfaces by a test driver with two occupants riding in the vehicle. The evaluation result was evaluated by a 5-point method in increments of 0.5 points from 0 points to 5 points with Conventional Example 1 as "3.0 (reference)," and indicated by an average point of five persons excluding the highest point and the lowest point. Larger points mean excellent steering stability.

High-speed durability

Each of the test tires was assembled on a wheel having a rim size a rim size of 18 × 7.5J and inflated to a test internal pressure of 250 kPa, and using a drum testing machine including a drum having a smooth drum surface made of steel and a diameter of 1707 mm, the ambient temperature was controlled to 38 ± 3°C, the load was 88% of the maximum load of JATMA, the travel speed was increased from 120 km/h in increments of 10 km/h every 30 minutes, and the travel speed until failure occurred in the tire was measured. The evaluation results are indicated as index values using measurement values of the travel distance, with Conventional Example being assigned an index value of 100. Larger index values indicate a larger travel distance until failure occurs and means excellent high-speed durability.

[Table 1-1]

| | | | Conventional Example 1 | Comparative Example 1 | Comparative Example 2 | Comparative Example 3 |
|---|---|---|---|---|---|---|
| Carcass | Number of layers | | 2 | 1 | 1 | 1 |
| | Cord material | | PET1 | PET1 | PET1 | PET2 |
| | Intermediate elongation | % | 5.0 | 5.0 | 5.0 | 7.0 |
| | Elongation at break | % | 16 | 16 | 16 | 25 |
| | Product A | dtex/50 mm | $3.2 \times 10^5$ | $1.6 \times 10^5$ | $1.6 \times 10^5$ | $1.6 \times 10^5$ |
| Under tread layer | Type | | A | A | B | A |
| | Hardness | | 55 | 55 | 63 | 55 |
| | M100 | MPa | 1.5 | 1.5 | 3.0 | 1.5 |
| | TB × EB | | 6200 | 6200 | 6400 | 6200 |
| | Anti-aging agent | mass% | 0.6 | 0.6 | 1.2 | 0.6 |
| Evaluation | Tire Mass | kg | ±0 | -1.1 | -1.1 | -1.1 |
| | Shock burst resistance | Index value | 100 | 85 | 86 | 116 |
| | Steering stability | | 3.0 | 2.5 | 2.8 | 2.5 |
| | High-speed durability | Index value | 100 | 95 | 89 | 88 |

[Table 1-2]

| | | | Comparative Example 4 | Comparative Example 5 | Example 1 | Example 2 |
|---|---|---|---|---|---|---|
| Carcass | Number of layers | | 1 | 1 | 1 | 1 |
| | Cord material | | PET1 | PET2 | PET2 | PET2 |
| | Intermediate elongation | % | 5.0 | 7.0 | 7.0 | 7.0 |
| | Elongation at break | % | 16 | 25 | 25 | 25 |
| | Product A | dtex/50 mm | $2.4 \times 10^5$ | $2.4 \times 10^5$ | $2.4 \times 10^5$ | $2.4 \times 10^5$ |
| Under tread layer | Type | | A | C | D | B |
| | Hardness | | 55 | 58 | 60 | 63 |
| | M100 | MPa | 1.5 | 1.9 | 2.0 | 3.0 |
| | TB $\times$ EB | | 6200 | 4800 | 3900 | 6400 |
| | Anti-aging agent | mass% | 0.6 | 1.2 | 1.5 | 1.2 |
| Evaluation | Tire Mass | kg | -0.8 | -0.8 | -0.8 | -0.8 |
| | Shock burst resistance | Index value | 92 | 118 | 120 | 123 |
| | Steering stability | | 2.8 | 2.9 | 3.4 | 3.5 |
| | High-speed durability | Index value | 98 | 92 | 103 | 102 |

[Table 1-3]

| | | | Example 3 | Comparative Example 6 | Comparative Example 7 |
|---|---|---|---|---|---|
| Carcass | Number of layers | | 1 | 1 | 1 |
| | Cord material | | PET2 | PET2 | PET3 |
| | Intermediate elongation | % | 7.0 | 7.0 | 8.5 |
| | Elongation at break | % | 25 | 25 | 19 |
| | Product A | dtex/50 mm | $2.4 \times 10^5$ | $2.4 \times 10^5$ | $2.4 \times 10^5$ |
| Under tread layer | Type | | E | F | B |
| | Hardness | | 65 | 67 | 63 |
| | M100 | MPa | 3.9 | 4.2 | 3.0 |
| | TB $\times$ EB | | 2300 | 1900 | 6400 |
| | Anti-aging agent | mass% | 1.5 | 1.5 | 1.2 |
| Evaluation | Tire Mass | kg | -0.8 | -0.8 | -0.8 |
| | Shock burst resistance | Index value | 125 | 126 | 101 |
| | Steering stability | | 3.7 | 4.0 | 3.5 |
| | High-speed durability | Index value | 101 | 94 | 102 |

Table 2

| | | | Under tread rubber composition | | | | | |
| --- | --- | --- | --- | --- | --- | --- | --- | --- |
| | | | A | B | C | D | E | F |
| Blend | NR | Parts by mass | 70.0 | 70.0 | 60.0 | 70.0 | 70.0 | 70.0 |
| | BR | Parts by mass | 30.0 | 30.0 | 40.0 | 30.0 | 30.0 | 30.0 |
| | CB | Parts by mass | 42.0 | 40.0 | 50.0 | 40.0 | 40.0 | 40.0 |
| | Silica | Parts by mass | | 12.0 | | 12.0 | 12.0 | 12.0 |
| | Tackifier | Parts by mass | 2.5 | 2.5 | 2.5 | 2.5 | 2.5 | 2.5 |
| | Zinc oxide | Parts by mass | 4.0 | 4.0 | 4.0 | 4.0 | 4.0 | 4.0 |
| | Anti-aging agent | Parts by mass | 1.0 | 2.0 | 2.0 | 2.5 | 2.5 | 2.5 |
| | Stearic acid | Parts by mass | 2.0 | 2.0 | 2.0 | 2.0 | 2.0 | 2.0 |
| | Sulfur | Parts by mass | 4.0 | 4.8 | 4.0 | 4.8 | 5.5 | 6.2 |
| | Vulcanization accelerator | Parts by mass | 1.2 | 1.2 | 1.2 | 1.2 | 1.2 | 1.2 |
| Physical properties and the like | Hardness | | 55 | 63 | 58 | 60 | 65 | 67 |
| | M100 (100°C) | MPa | 1.5 | 3.0 | 1.9 | 2.0 | 3.9 | 4.2 |
| | TB × EB (100°C) | | 6200 | 6400 | 4800 | 3900 | 2300 | 1900 |
| | Anti-aging agent | mass% | 0.6 | 1.2 | 1.2 | 1.5 | 1.5 | 1.5 |

The types of raw materials used in Table 2 are listed below.

· NR: natural rubber, natural rubber, TSR20
· BR: butadiene rubber, butadiene rubber, UBEPOL BR360L available from Ube Industries, Ltd.
· CB: carbon black, SEAST F (CTAB adsorption specific surface area: 47 m$^2$/g), available from Tokai Carbon Co., Ltd.
· Silica: Ultrasil VN3 (CTAB adsorption specific surface area: 175 m$^2$/g) available from Evonick Japan Co., Ltd.
· Tackifier: Hitanol 1502 Z available from Hitachi Chemical Company, Ltd.
· Zinc oxide: Zinc Oxide III, available from Seido Chemical Industry Co., Ltd.
· Anti-aging agent: amine-based anti-aging agent, Santflex 6PPD, available from Flexsys
· Stearic acid: Stearic acid 50S, available from New Japan Chemical Co., Ltd.
· Sulfur: insoluble sulfur, MUCRON OT-20, available from Shikoku Chemicals Corporation
· Vulcanization accelerator: NS-G, available from Sanshin Chemical Industry Co., Ltd.

As can be seen from Table 1, the tires of Examples 1 to 3 reduced in tire mass and improved in shock burst resistance, steering stability, and high-speed durability, in contrast to Comparative Example 1, and these performances were provided in a well-balanced manner. On the other hand, in Comparative Example 1, since the number of carcass layers was simply reduced to one layer as compared with Conventional Example 1, shock burst resistance, steering stability, and high-speed durability were deteriorated. In Comparative Example 2, although the under tread layer satisfied the conditions of an embodiment of the present invention, the physical properties of the carcass cords were inappropriate, and therefore shock burst resistance, steering stability, and high-speed durability were deteriorated. In Comparative Example 3, although the physical properties of the carcass cords were good except for the product A, the product A was too small and the physical properties of the under tread layer were also inappropriate, and therefore steering stability and high-speed durability were deteriorated. In Comparative Example 4, the physical properties other than the product A of the carcass cords were inappropriate, and the physical properties of the under tread layer were also inappropriate, and therefore shock burst resistance, steering stability, and high-speed durability were deteriorated. In Comparative Example 5, although the physical properties of the carcass cord were good, the physical properties of the under tread layer were inappropriate, and therefore steering stability and high-speed durability were deteriorated. In Comparative Example 6, although the physical properties of the carcass cords were good, the physical properties of the under tread layer were inappropriate, and therefore high-speed durability was deteriorated. In Comparative Example 7, since the elongation at break of the carcass cord was small, the effect of improving the shock burst resistance was not able to be sufficiently obtained.

Reference Signs List

1 Tread portion
2 Sidewall portion
3 Bead portion
4 Carcass layer
5 Bead core
6 Bead filler
7 Belt layer
8 Belt reinforcing layer
10 Tread rubber layer
11 Cap tread layer
12 Under tread layer
20 Side rubber layer
30 Rim cushion rubber layer
CL Tire equator

**Claims**

1. A pneumatic tire, comprising:

   a tread portion extending in a tire circumferential direction and having an annular shape;
   a pair of sidewall portions respectively disposed on both sides of the tread portion;
   a pair of bead portions each disposed on an inner side of the pair of sidewall portions in a tire radial direction;
   one carcass layer mounted between the pair of bead portions;
   a plurality of belt layers disposed on an outer circumferential side of the carcass layer in the tread portion; and
   a belt reinforcing layer disposed on an outer circumferential side of the belt layer;
   the tread portion being made up of two layers, an under tread layer disposed on an outer circumferential side of the belt reinforcing layer and a cap tread layer disposed on an outer circumferential side of the under tread layer and constituting a road contact surface of the tread portion,
   an under tread rubber composition constituting the under tread layer having hardness at 20°C ranging from 60 to 65, tensile stress at 100% (M100) elongation at 100°C ranging from 2.0 MPa to 4.0 MPa, and a product (TB $\times$ EB) of tensile strength TB (unit: MPa) at 100°C and an elongation at break EB (unit: %) at 100°C of 2000 or more, and
   a carcass cord constituting the carcass layer being made of an organic fiber cord having an elongation ratio under a load of 1.5 cN/dtex on an inner circumferential side of the belt layer ranging from 5.5% to 8.5% and an elongation at break ranging from 20% to 30%, and a product A = D $\times$ Ec of a fineness based on corrected mass D per carcass cord (unit: dtex/cord) and an insertion count Ec (unit: cord count/50 mm) of the carcass cord per 50 mm in a direction orthogonal to an extension direction of the carcass cord satisfying a relationship ranging from $1.8 \times 10^5$ dtex/50 mm to $3.0 \times 10^5$ dtex/50 mm.

2. The pneumatic tire according to claim 1, wherein a mass of an anti-aging agent blended in the under tread rubber composition ranges from 0.7 mass% to 2.0 mass% of a mass of an entirety of the under tread rubber composition.

3. The pneumatic tire according to claim 1 or 2, wherein a cover cord constituting the belt reinforcing layer is made of an organic fiber cord having an elongation ratio under a load of 2.0 cN/dtex at 100°C ranging from 2.0% to 4.0%.

FIG. 1

EP 4 450 298 A1

# INTERNATIONAL SEARCH REPORT

| International application No. |
|---|
| **PCT/JP2022/045068** |

## A. CLASSIFICATION OF SUBJECT MATTER

**B60C 9/08**(2006.01)i; **B60C 1/00**(2006.01)i; **B60C 9/00**(2006.01)i; **B60C 9/22**(2006.01)i; **B60C 11/00**(2006.01)i
FI:   B60C9/08 Z; B60C1/00 A; B60C11/00 B; B60C11/00 D; B60C9/22 C; B60C9/22 D; B60C9/00 B

According to International Patent Classification (IPC) or to both national classification and IPC

## B. FIELDS SEARCHED

Minimum documentation searched (classification system followed by classification symbols)

B60C9/08; B60C1/00; B60C9/00; B60C9/22; B60C11/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| Y | JP 2021-181530 A (YOKOHAMA RUBBER CO LTD) 25 November 2021 (2021-11-25) claims, paragraphs [0018]-[0021], [0038], examples 1-13 | 1-2 |
| Y | JP 2021-165088 A (YOKOHAMA RUBBER CO LTD) 14 October 2021 (2021-10-14) claims, paragraphs [0021]-[0023], examples 1-6 | 1-2 |
| Y | JP 2020-142702 A (YOKOHAMA RUBBER CO LTD) 10 September 2020 (2020-09-10) claims, examples 1-3, 5-6 | 1-2 |
| A | JP 2017-226317 A (YOKOHAMA RUBBER CO LTD) 28 December 2017 (2017-12-28) claims, examples 1-4 | 1-3 |
| A | JP 2021-167141 A (YOKOHAMA RUBBER CO LTD) 21 October 2021 (2021-10-21) claims, examples 1-4 | 1-3 |
| A | JP 2021-24509 A (YOKOHAMA RUBBER CO LTD) 22 February 2021 (2021-02-22) claims, examples 1-12 | 1-3 |
| A | JP 2006-159984 A (YOKOHAMA RUBBER CO LTD) 22 June 2006 (2006-06-22) claims, examples 1-7 | 1-3 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 February 2023** | **21 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/045068**

| Patent document cited in search report | | | Publication date (day/month/year) | Patent family member(s) | | | Publication date (day/month/year) |
|---|---|---|---|---|---|---|---|
| JP | 2021-181530 | A | 25 November 2021 | (Family: none) | | | |
| JP | 2021-165088 | A | 14 October 2021 | WO | 2021/206016 | A1 | |
| JP | 2020-142702 | A | 10 September 2020 | US | 2022/0134803 | A1 | |
| | | | | claims, examples 1-3, 5-6 | | | |
| | | | | WO | 2020/179921 | A1 | |
| | | | | CN | 113474183 | A | |
| JP | 2017-226317 | A | 28 December 2017 | (Family: none) | | | |
| JP | 2021-167141 | A | 21 October 2021 | (Family: none) | | | |
| JP | 2021-24509 | A | 22 February 2021 | (Family: none) | | | |
| JP | 2006-159984 | A | 22 June 2006 | (Family: none) | | | |

Form PCT/ISA/210 (patent family annex) (January 2015)

**EP 4 450 298 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010137812 A